(19) Europäisches Patentamt
European Patent Office
Office européen des brevets

(11) **EP 2 670 567 B1**

(12) **FASCICULE DE BREVET EUROPEEN**

(45) Date de publication et mention de la délivrance du brevet:
**25.03.2015   Bulletin 2015/13**

(21) Numéro de dépôt: **12707831.9**

(22) Date de dépôt: **31.01.2012**

(51) Int Cl.:
**B25J 7/00** [(2006.01)]        **B25J 15/00** [(2006.01)]

(86) Numéro de dépôt international:
**PCT/FR2012/050209**

(87) Numéro de publication internationale:
**WO 2012/104546 (09.08.2012 Gazette 2012/32)**

(54) **MICRO-ROBOT, PROCEDE DE COMMANDE, PROCEDE DE SIMULATION ET PROGRAMMES D'ORDINATEUR ASSOCIES**

MIKROROBOTER UND ZUGEHÖRIGES STEUERUNGSVERFAHREN, SIMULATIONSVERFAHREN SOWIE COMPUTERPROGRAMME

MICROROBOT, AND ASSOCIATED CONTROL METHOD, SIMULATION METHOD, AND COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **03.02.2011   FR 1150883**

(43) Date de publication de la demande:
**11.12.2013   Bulletin 2013/50**

(73) Titulaires:
• **Centre National de la Recherche Scientifique (CNRS)**
**75794 Paris Cedex 16 (FR)**
• **Université De Franche-Comté Besancon**
**25000 Besançon (FR)**
• **ENSMM - Ecole Nationale Supérieure de Mécanique et**
**des Microtechniques**
**25030 Besancon (FR)**

(72) Inventeurs:
• **CHALVET, Vincent**
**F-25000 Besancon (FR)**
• **HADDAB, Yassine**
**F-25000 Besancon (FR)**
• **LUTZ, Philippe**
**F-25870 Chatillon Le Duc (FR)**

• **ZARZYCKI, Artur**
**05-300 Misk Mazowiecki (PL)**

(74) Mandataire: **Cabinet Plasseraud**
**52, rue de la Victoire**
**75440 Paris Cedex 09 (FR)**

(56) Documents cités:
**US-B1- 7 012 491**

• **GREMINGER M A ET AL: "A Four Degree of Freedom MEMS Microgripper with Novel Bi-Directional Thermal Actuators", 2005 IEEE/RSJ INTERNATIONAL CONFERENCE ON INTELLIGENT ROBOTS AND SYSTEMS; EDMONTON, AB, CANADA; 2 - 6 AUGUST 2005, IEEE, PISCATAWAY, NJ, USA, 2 août 2005 (2005-08-02), pages 1166-1171, XP010857233, DOI: 10.1109/IROS.2005.1545137 ISBN: 978-0-7803-8912-0**
• **Qiao Chen, Yassine Haddab, Philippe Lutz: "Microfabricated Bistable Module for Digital Microrobotics", Journal of Micro Nano Mechatronics, 21 janvier 2011 (2011-01-21), XP002660690, DOI: 10.1007/s12213-010-0025-2 Extrait de l'Internet: URL:http://hal.archives-ouvertes.fr/docs/0 0/55/84/15/PDF/ JMNM2010_Yassine.pdf [extrait le 2011-10-06]**

EP 2 670 567 B1

**EP 2 670 567 B1**

**Description**

La présente invention concerne un micro-robot, un procédé de commande, un procédé de simulation et des programmes d'ordinateur associés.

Dans des applications médicales ou en microscopie électronique (TEM, SEM), des objets présentant une taille inférieure au millimètre doivent être déplacés en milieu confiné. Pour réaliser ces déplacements, des micro-robots ont été conçus dans des matériaux actifs (en anglais « smart material »). Un tel micro-robot est par exemple présenté dans l'article "A Four Degree of Freedom MEMS Microgripper with Novel Bi-Directional Thermal Actuators" soumis par Michael A. Greminger et al. pour la conférence 2005 de l'IEEE/RSJ intitulée International Conférence on Intelligent Robots and Systems.

Ces micro-robots permettent de déplacer un objet d'une distance proportionnelle à la valeur ou à la durée d'un stimulus. Les stimulus sont, par exemple, constitués par l'application d'un champ électrique ou magnétique, l'application d'une tension ou d'une variation de température.

Toutefois, le fonctionnement de ces micro-robots est souvent complexe et non linéaire à savoir que le déplacement du matériau actif n'est pas une fonction linéaire du stimulus appliqué. De plus, le fonctionnement de ces micro-robots est parfois non stationnaire c'est-à-dire que les conditions environnementales telles que la température et l'humidité ont une influence sur celui-ci. Ces micro-robots sont généralement contrôlés en boucle fermée. Cette commande en boucle fermée requiert l'intégration de petits capteurs et l'utilisation d'instruments de traitement du signal couteux et volumineux. L'encapsulation et l'intégration de ces capteurs est également difficile.

Pour palier à ces difficultés, des modules d'entraînement bistables, appelés « modules bistables », ont été développés. Un tel module bistable est par exemple utilisé pour réaliser un micro-robot dans l'article "Microfabricated Bistable Module for Digital Microrobotics" publié en janvier 2011 par Qiao Chen et autres dans la revue "Journal of Micro Nano Mechatronics". Ces modules bistables comprennent chacun un doigt d'entraînement apte à se déplacer dans deux positions stables. Pour augmenter l'espace de travail de ces modules bistables à un nombre de positions supérieur à deux positions, ces modules bistables ont été empilés les uns sur les autres.

Toutefois, cet empilement n'est pas solide et présente un risque d'effondrement élevé. De plus, cet empilement ne permet de déplacer des objets que le long d'une ligne.

La présente invention a notamment pour but de palier ces inconvénients et de proposer un micro-robot fournissant un espace de travail en deux dimensions.

A cet effet, l'invention a pour objet un micro-robot micro-fabriqué selon la technologie des microsystèmes électromécaniques, comprenant i paire de modules d'entraînement ; i variant de 1 à n avec n supérieur ou égal à 1 ; chaque module d'entraînement comportant un doigt d'entraînement propre à être déplacé selon une direction, dite seconde direction y ; caractérisé en ce que le micro-robot comporte :

- un support agencé pour porter deux modules d'entraînement alignés selon une direction perpendiculaire à la seconde direction y, dite première direction x ; lesdits modules d'entraînement formant une paire de modules d'entraînement ;
- i paire d'embiellages primaires, chaque embiellage primaire étant articulé au doigt d'entraînement d'un module d'entraînement de la $i^{ième}$ paire de modules d'entrainement ;
- une paire d'embiellage secondaire, chaque embiellage secondaire étant articulé à l'embiellage primaire de la $n^{ième}$ paire de modules d'entrainement et au support ; et
- un organe d'actionnement articulé à chaque embiellage secondaire.

Ainsi, ce micro-robot est apte à se déplacer selon deux directions dans au moins quatre positions définissant un quadrilatère.

Suivant des modes particuliers de réalisation, le micro-robot peut comporter l'une ou plusieurs des caractéristiques suivantes :

- les embiellages primaires et les embiellages secondaires comportent chacun une bielle s'étendant selon la première direction x, dite première bielle, et une bielle s'étendant selon la seconde direction y, dite seconde bielle, ladite seconde bielle étant articulée à la première bielle ;
- les secondes bielles d'un embiellage secondaire sont articulées sensiblement au milieu des premières bielles d'un embiellage primaire, et lorsque n est supérieur ou égal à 2, les secondes bielles d'un embiellage primaire articulé à un module d'entraînement d'une $i^{ième}$ paire sont articulées sensiblement au milieu des premières bielles d'un embiellage primaire articulé à un module d'entraînement d'une $i-1^{ième}$ paire ;
- les premières bielles présentent chacune une dimension supérieure à 100 fois la distance apte à être parcourue par un doigt d'entraînement d'un unique module d'entraînement ;
- l'organe d'actionnement comporte deux bras d'actionnement articulés l'un à l'autre ; lesdits bras d'actionnement s'étendent sensiblement selon un angle de 45° par rapport aux premières bielles des embiellages secondaires ;

- le support comporte n zones intercalaires intercalées dans la première direction x entre les modules d'entraînement d'une même paire ; et lorsque n est supérieur ou égal à 2, pour i variant de 1 à n, la i-1$^{ième}$ zone intercalaire intercalée entre les modules d'entraînement de la i-1$^{ième}$ paire présente une dimension supérieure selon la première direction x à la zone intercalaire intercalée entre les modules d'entraînement de la i$^{ième}$ paire ;
- le support comporte n paire de prolongements propre à porter chacun au moins une partie d'un module d'entraînement ; lesdits prolongements s'étendant dans la première direction x dans un sens opposé l'un à l'autre ;
- lorsque n est supérieur à 2 ; les modules d'entraînement de la i$^{ième}$ paire sont chacun intercalés entre les modules d'entraînement de la i-1$^{ième}$ paire et les modules d'entraînement de la i+1$^{ième}$ paire ; et dans lequel les modules d'entraînement de la i$^{ième}$ paire sont alignés selon la seconde direction y et décalés, chacun en sens opposé selon la première direction x, par rapport aux modules d'entraînement de la i +1 $^{ième}$ paire ;
- pour i égal à 1, les embiellages primaires articulés à la i$^{ième}$ paire de modules d'entraînement sont articulés au prolongement portant cette i$^{ième}$ paire de modules d'entraînement,
- pour i variant de 2 à n, les embiellages primaires articulés à la i$^{ième}$ paire de modules d'entraînement sont également articulés chacun à l'embiellage primaire articulé à la i-1$^{ième}$ paire de modules d'entraînement ;
- chaque module d'entraînement comporte au moins un actionneur propre à déplacer le doigt d'entraînement, lorsque ledit actionneur est alimenté en courant, et dans lequel ledit support porte des liaisons électriques dans lesquelles un courant électrique est propre à passer pour alimenter lesdits actionneurs.

L'invention a également pour objet un procédé de commande d'un déplacement de l'organe d'actionnement d'un micro-robot tel que défini ci-dessus vers une position définie par des coordonnées dans un repère prédéfini R' ; ledit procédé comportant les étapes suivantes :

- pour chaque coordonnée parmi ladite abscisse et ladite ordonnée,

    - division de ladite coordonnée par l'écart minimal $\delta_{x'}$, $\delta_{y'}$ entre deux positions aptes à être atteintes par l'organe d'actionnement ;
    - calcul de l'entier le plus proche du résultat de ladite division ;
    - conversion binaire dudit entier le plus proche ;
    - pour chaque bit égal à un de chaque nombre binaire obtenu, déplacement vers une position haute du doigt d'actionnement d'un module d'entraînement défini par des liaisons électriques formées sur ledit support.

De plus, l'invention a pour objet un procédé de simulation du déplacement d'un objet par un micro-robot tel que défini ci-dessus, ledit procédé comportant les étapes suivantes :

- saisie en nombre binaire des positions des doigts d'actionnement de chaque module d'entraînement du micro-robot ;
- calcul de l'ordonnée et de l'abscisse de l'organe d'actionnement dans un repère prédéfini R' à partir de la longueur de la première bielle, de la largeur de la première bielle et des déplacements $\delta_l$, $\delta_r$ des modules d'entraînement.

En outre, l'invention a pour objet un programme d'ordinateur caractérisé en ce qu'il comporte des instructions pour mettre en oeuvre le procédé de commande tel que défini ci-dessus, lorsqu'elles sont exécutées par un processeur.
Enfin, l'invention a pour objet un programme d'ordinateur caractérisé en ce qu'il comporte des instructions pour mettre en oeuvre le procédé de simulation tel que défini ci-dessus, lorsqu'elles sont exécutées par un processeur.
L'invention sera mieux comprise à la lecture de la description qui va suivre, donnée uniquement à titre d'exemple et faîte en se référant aux dessins, sur lesquels :

- la figure 1 est une vue schématique de face d'un micro-robot selon un premier mode de réalisation de l'invention ;
- la figure 2 est un schéma de principe du micro-robot illustré sur la figure 1 ;
- la figure 3 est une vue de face d'un module d'entraînement du micro-robot illustré sur la figure 1 ;
- la figure 4 est une vue de face d'un actionneur du module d'entraînement illustré sur la figure 3 ;
- la figure 5 est une vue en perspective d'un organe d'arrêt supérieur du module d'entraînement illustré sur la figure 3 ;
- la figure 6 est un schéma représentant l'espace de travail généré par le micro-robot illustré sur la figure 1 ;
- la figure 7 est une photo représentant un micro-robot selon un deuxième mode de réalisation de l'invention ;
- la figure 8 est un schéma de principe d'un micro-robot selon un troisième mode de réalisation de l'invention ;
- la figure 9 est un schéma représentant l'espace de travail généré par le micro-robot illustré sur la figure 8 ;
- la figure 10 est un diagramme représentant les étapes du procédé de commande selon l'invention ; et
- la figure 11 est un diagramme représentant les étapes du procédé de simulation selon l'invention.

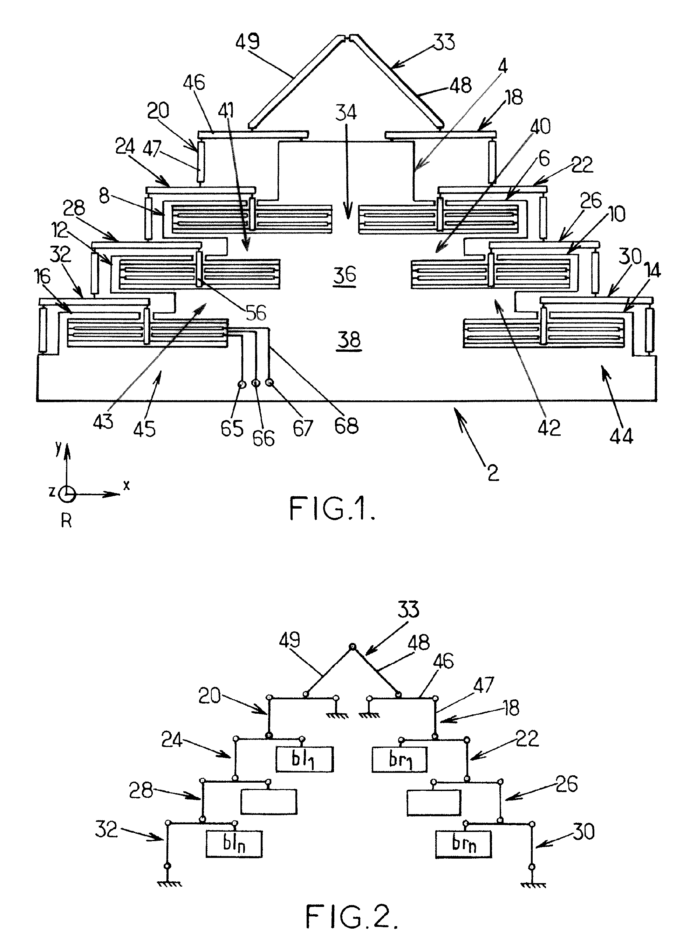

La présente invention est définie par rapport à un repère orthogonal R (x, y, z) représenté sur la figure 1. Le sens des vecteurs x, y et z est défini comme étant le sens positif. Le sens inverse est défini comme étant un sens négatif.

Par convention, dans la description qui va suivre, la direction x du repère R (x, y, z) est appelée « première direction » et la direction y de ce repère est appelée « seconde direction ». Dans la description qui va suivre, les termes « haut », « bas », « inférieur », « supérieur », « droite » et « gauche » sont définis lorsque le micro-robot selon l'invention est disposé comme illustré sur la figure 1, et ne sont nullement limitatifs.

Sur les différentes figures, les éléments désignés par la même référence désignent des éléments identiques ou similaires.

Le micro-robot selon l'invention est micro fabriqué selon la technologie des microsystèmes électromécaniques généralement appelés « MEMS » (de l'anglais « Micro Electromecanical System »). Il est, par exemple, réalisé à partir de silicium. Il est constitué par une plaque monolithique qui s'étend dans le plan (x, y) et dans laquelle l'ensemble des constituants décrits ci-après est formé.

En référence à la figure 1, le micro-robot 2 comporte un support 4, six modules d'entraînement 6 à 16 portés par le support 4, huit embiellages 18 à 32 articulés aux modules d'entraînement 6 à 16 et un organe d'actionnement 33 articulé à deux embiellages 18, 20.

Les modules d'entraînement 6 à 16 sont solidaires du support 4. Ils sont disposés selon trois paires 6 et 8, 10 et 12, 14 et 16 alignées selon la première direction x.

Les trois paires de modules d'entraînement 6 et 8, 10 et 12, 14 et 16 sont superposées selon la seconde direction y. En particulier, le module d'entraînement 6 de droite de la troisième paire 6, 8 est aligné selon la seconde direction y et décalé dans le sens négatif de la première direction x par rapport au module d'entraînement 10 de droite de la deuxième paire 10, 12 ; la deuxième paire est alignée selon la direction y par rapport à la troisième paire 6, 8. Le module d'entraînement 8 de gauche de la troisième paire 6, 8 est aligné selon la seconde direction y et décalé dans le sens positif de la première direction x par rapport au module d'entraînement 12 de gauche de la deuxième paire 10, 12. Les modules d'entrainement de la première paire 14, 16 sont également disposés de la même façon par rapport aux modules d'entraînement de la deuxième paire 10, 12.

Le support 4 est propre à s'élargir dans la première direction x lorsqu'on se dirige dans le sens négatif de la seconde direction y. Il présente une forme générale triangulaire plane dont deux côtés opposés ont une forme de marche.

Il comporte trois zones intercalaires 34, 36, 38 intercalées chacune dans la première direction x entre les modules d'entraînement d'une même paire. Ainsi, la zone intercalaire 34 est intercalée entre les modules d'entraînement 6 et 8 de la troisième paire. La zone intercalaire 36 est intercalée entre les modules d'entraînement 10 et 12 de la deuxième paire. Enfin, la zone intercalaire 38 est intercalée entre les modules d'entraînement 14 et 16 de la première paire.

La zone intercalaire 38 intercalée entre les modules d'entraînement 14 et 16 de la première paire présente une dimension supérieure selon la première direction x à la zone intercalaire 36 intercalée entre les modules d'entraînement 10 et 12 de la deuxième paire. De même, la zone intercalaire 36 intercalée entre les modules d'entraînement 10 et 12 de la deuxième paire présente une dimension supérieure selon la première direction x à la zone intercalaire 34 intercalée entre les modules d'entrainement 6 et 8 de la troisième paire.

Le bord inférieur droit de chaque zone intercalaire 34, 36, 38, se poursuit par un prolongement 40, 42, 44 s'étendant dans le sens positif de la première direction x. Le bord inférieur gauche de chaque zone intercalaire 34, 36, 38, se poursuit également par un prolongement 41, 43, 45 s'étendant dans le sens négatif de la première direction x.

Chaque prolongement 40 à 45 est propre à porter une partie d'un module d'entraînement. Les prolongements 40, 41 ; 42, 43 portant les modules d'entraînement des deuxième et troisième paires 10, 12 ; 6, 8 s'étendent au-dessus d'une partie des modules d'entraînement des première et deuxième paires 14, 16 ; 10, 12. Par exemple, le prolongement 42 de droite portant le module d'entraînement 10 de droite de la deuxième paire 10, 12 s'étend au-dessus d'une partie du module d'entraînement 14 de droite de la première paire 14, 16. De même, le prolongement 43 de gauche portant le module d'entraînement 12 de gauche de la deuxième paire 10, 12 s'étend au-dessus d'une partie du module d'entraînement 16 de gauche de la première paire 14, 16. Ainsi, les prolongements 40 à 45 permettent de supporter et de rigidifier les modules d'entraînement 6 à 16, tout en autorisant la mobilité du micro-robot 2.

Les embiellages 18 à 32 comportent des embiellages 22 à 32 articulés à un doigt d'entraînement 56 d'un module d'entraînement, appelés ci-après, embiellages primaires, et des embiellages 18, 20 articulés à l'organe d'actionnement 33 appelés ci-après, embiellages secondaires.

Dans la suite de la description, il est appelé première 30, 32, deuxième 26, 28 et troisième 22, 24 paires d'embiellages primaires, les embiellages primaires articulés aux doigts d'entrainement des modules d'entrainement de la première paire 14, 16, de la deuxième paire 10, 12 ; et respectivement de la troisième paire 6, 8.

Les embiellages primaires d'une paire donnée sont également articulés chacun à l'embiellage primaire de la paire alignée selon la direction y et décalée selon la direction x avec cette paire donnée. Par exemple, les embiellages primaires de la troisième paire 22, 24 sont également articulés aux embiellages primaires de la deuxième paire 26, 28. De la même façon, les embiellages primaires de la deuxième paire 26, 28 sont également articulés aux embiellages primaires de la première paire 30, 32.

Les embiellages primaires de la première paire 30, 32 sont articulés au prolongement 44, 45 portant les modules d'entraînement 14, 16 de la première paire.

Les embiellages 18 à 32 sont chacun constitués de deux poutres équipées, à chacune de leur extrémité, de rétrécissements formant des joints flexibles circulaires qui jouent le rôle de liaison de rotation. Dans la description ci-après, ces poutres articulées sont désignées par le terme «bielle». Les embiellages primaires et secondaires 18 à 32 comportent chacun une bielle 46 s'étendant selon la première direction x, appelée ci-après première bielle 46 et une bielle s'étendant selon la seconde direction y, appelée ci-après seconde bielle 47.

Les premières bielles 46 présentent, de préférence, une dimension supérieure à cent fois la distance apte à être parcourue par le doigt d'entraînement 56 d'un module d'entraînement. De préférence, les premières bielles présentent une longueur légèrement supérieure à la largeur d'un module d'entraînement, c'est-à-dire supérieure à quelques millimètres ; les secondes bielles présentent une longueur légèrement supérieure à la hauteur d'un module d'entraînement, c'est-à-dire supérieure à quelques millimètres.

Selon le mode de réalisation de l'invention illustré sur la figure 1, les secondes bielles 47 d'une paire d'embiellages primaires donnée ainsi que les secondes bielles d'une paire d'embiellages secondaires sont articulées sensiblement au milieu des premières bielles 46 de la paire d'embiellages primaires alignée selon la seconde direction y par rapport à la paire donnée. Ainsi, les secondes bielles 47 des embiellages secondaires 18, 20 sont articulées sensiblement au milieu des premières bielles 46 des embiellages primaires de la troisième paire 22, 24. De même, les secondes bielles 47 des embiellages primaires de la troisième paire 22, 24 sont articulées sensiblement au milieu des premières bielles 46 des embiellages primaires de la deuxième paire 26, 28.

L'organe d'actionnement 33 est propre à pousser ou à porter des micro ou nano objets. Il comprend deux bras d'actionnement 48, 49 articulés l'un à l'autre. Chaque bras d'actionnement 48 présente un angle de 90°par rapport à l'autre bras d'actionnement 49.

Les bras d'actionnement 48, 49 sont articulés chacun sensiblement au milieu de la première bielle 46 des embiellages secondaires 18, 20. Chaque bras d'actionnement 48, 49 s'étend sensiblement selon un angle de 45° par rapport aux premières bielles 46 des embiellages secondaires 18, 20. Cette configuration permet de générer un espace de travail ayant quatre angles droits.

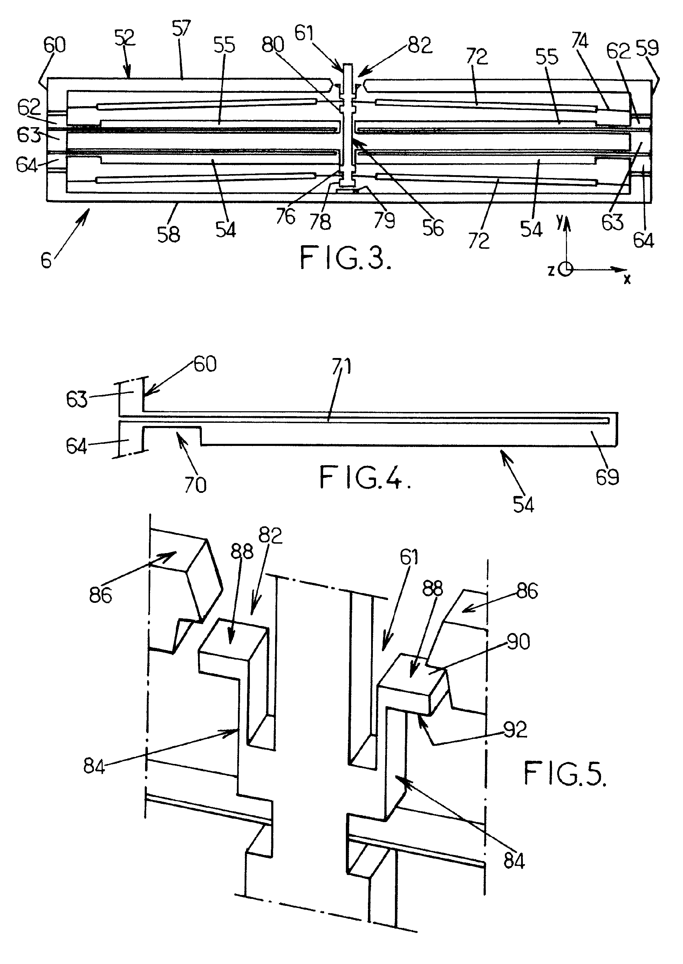

Les modules d'entraînement 6 à 16 sont identiques. Seul le module d'entraînement 6 est décrit en détail. En référence à la figure 3, chaque module d'entraînement 6 comporte un bâti parallélépipédique rectangle 52, deux actionneurs inférieurs 54 et deux actionneurs supérieurs 55 portés par le bâti 52, et un doigt d'entraînement 56 propre à être déplacé dans le sens positif de la seconde direction y, par les actionneurs supérieurs 55 et dans un sens négatif de cette même direction, par les actionneurs inférieurs 54.

Le bâti comprend deux traverses 57, 58 fixés à deux montants 59, 60. La traverse 57 supérieure est pourvue d'une ouverture 61 traversée par le doigt d'entraînement 56. Un actionneur inférieur 54 et un actionneur supérieur 55 sont fixés à la face intérieure du montant 59 de droite. Un actionneur inférieur 54 et un actionneur supérieur 55 sont fixés à la face intérieure du montant 60 de gauche.

Trois contacts électriques 62, 63, 64 sont formés sur la face s'étendant dans le plan (x, y) de chaque montant 59, 60 du bâti 52. Les contacts électriques 62, 63, 64 sont reliés électriquement à des bornes électriques 65, 66, 67, par des liaisons électriques 68 pour alimenter en courant les actionneurs inférieurs 54 et les actionneurs supérieurs 55, comme visible sur la figure 1. Le contact électrique central 63 est relié électriquement à la masse. Les liaisons électriques 68 sont obtenues par dépôt d'une couche d'atomes d'aluminium, puis diffusion des atomes dans le silicium par recuit dans un four à 400 °C pendant une heure environ. Sur la figure 1, seules trois liaisons électriques 68 permettant d'alimenter un actionneur inférieur 54 et un actionneur supérieur 55 ont été représentées pour des raisons de simplification. En pratique, le support 4 porte des liaisons électriques et des bornes électriques permettant d'alimenter tous les actionneurs du micro-robot.

Les actionneurs sont identiques entre eux. Ils sont disposés de façon symétrique dans le bâti 52. En particulier, l'actionneur inférieur 54 de gauche est disposé de façon symétrique par rapport au plan (x, z) à l'actionneur supérieur 55 de gauche. L'actionneur inférieur 54 de droite est disposé de façon symétrique par rapport au plan (y, z) à l'actionneur inférieur 54 de gauche.

Seul l'actionneur inférieur 54 de gauche est décrit en détail en référence à la figure 4. Il est formé par une lamelle 69 qui s'étend selon la première direction x. Le bord inférieur de la lamelle 69 est pourvu d'une découpe rectangulaire 70 située à proximité du montant 60 de gauche. La lamelle 69 est en outre munie d'une fente longitudinale 71 débouchant à l'extérieur du montant 60 de gauche, de part et d'autre des contacts électriques 63, 64 alimentant l'actionneur inférieur 54 de gauche. Comme la lamelle 69 est fabriquée dans un matériau actif, elle est propre à se courber en fonction de l'intensité du courant la traversant. Ainsi, la lamelle 69 est propre à se courber lorsqu'elle est traversée par un courant appliqué entre les contacts électriques 63 et 64.

Le module d'entraînement 6 comporte en outre quatre poutres 72 s'étendant sensiblement selon la première direction x. Deux poutres 72 disposées à droite sont fixées, par l'intermédiaire de languettes 74, d'une part, au montant de droite 59 et, d'autre part, au doigt d'entraînement 56. Ces poutres 72 sont fixées, l'une, entre la traverse supérieure 57 et l'actionneur supérieur 55 et, l'autre, entre la traverse inférieure 58 et l'actionneur inférieur 54. Les deux poutres 72 disposées à gauche présentent la même disposition que les deux poutres 72 disposées à droite à l'exception du fait qu'elles soient fixées au montant de gauche 60.

Les poutres inférieures et supérieures 72 permettent de maintenir le doigt d'entraînement 56 dans la position basse ou la position haute, lorsqu'il n'y a plus de courant appliqué entre les contacts électriques 63 et 64.

Le doigt d'entraînement 56 s'étend selon la seconde direction y. Il comporte un bloc d'entraînement inférieur 76 et un bloc d'entraînement supérieur 80 s'étendant chacun dans la première direction x de part et d'autre du corps du doigt d'entraînement 56.

Les faces inférieures des extrémités libres des actionneurs inférieurs 54 sont propres à pousser chacun une face supérieur du bloc d'entraînement inférieur 76 pour déplacer le doigt d'entraînement 56 dans le sens négatif de la seconde direction, lorsqu'un courant est appliqué entre les contacts électriques 63 et 64 pour positionner le doigt d'entraînement 56 en position basse.

De la même façon, les faces supérieures des extrémités libres des actionneurs supérieurs 55 sont propres à pousser chacun une face inférieure du bloc d'entraînement supérieur 80 pour déplacer le doigt d'entraînement 56 dans le sens positif de la seconde direction, lorsqu'un courant est appliqué entre les contacts électriques 62 et 63 pour positionner le doigt d'entraînement 56 en position haute.

Le doigt d'entraînement 56 comporte en outre un bloc d'arrêt inférieur 78 et un organe d'arrêt supérieur 82 propre à garantir une grande précision sur le positionnement du doigt d'entraînement 56, lorsque celui-ci est dans sa position basse et respectivement haute.

Le bloc d'arrêt inférieur 78 est propre à venir au contact d'un appui 79 formé au centre de la face intérieure de la traverse inférieure 58, lorsque le doigt d'entraînement 56 est positionné dans une position basse.

L'organe d'arrêt supérieur 82, illustré sur la figure 5, comporte deux pattes élastiques 84, chacune propre à coopérer avec une dent 86 formée sur un bord de l'ouverture 61 du bâti 52. Les pattes élastiques 84 présentent une forme générale en L inversé. Les branches 88 de chaque patte élastique 84 s'étendent selon la première direction x selon des sens opposés l'un à l'autre. Une partie de la face supérieure 90 de chaque branche 88 est propre à venir en appui sur une face d'appui 92 s'étendant dans le plan (x, z) de la dent 86, lorsque le doigt d'entraînement 56 est dans une position haute.

Compte tenu de la forme et de la structure du micro-robot 2, les modules d'actionnement 14, 16 de la première paire sont propres à déplacer l'organe d'actionnement 33 d'une distance égale à un déplacement élémentaire $\delta_{x'}$ ou $\delta_{y'}$. Les modules d'actionnement 10, 12 de la deuxième paire sont propres à déplacer l'organe d'actionnement 33 d'une distance égale à deux déplacements élémentaires, c'est-à-dire $2\delta_{x'}$ ou $2\delta_{y'}$. Enfin, Les modules d'actionnement 6, 8 de la troisième paire sont propres à déplacer l'organe d'actionnement 33 d'une distance égale à quatre déplacements élémentaires, c'est-à-dire $4\delta_{x'}$ ou $4\delta_{y'}$.

Le fonctionnement des modules d'entraînement 6 à 16 est décrit en détail dans le document intitulé « Microfabricated bistable module for digital microrobotics » de Qiao Chen, Yassine Haddab et Philippe Lutz publié le 14 septembre 2010 chez Springer et le document « Characterization and control of a monolithically fabricated bistable module for microrobotic applications » de Qiao Chen, Yassine Haddab et Philippe Lutz, publié dans «IEEE/RSJ International Conference on Intelligent Robots and Systems, IROS'10., Taipei : Taiwan, Province of China (2010) ».

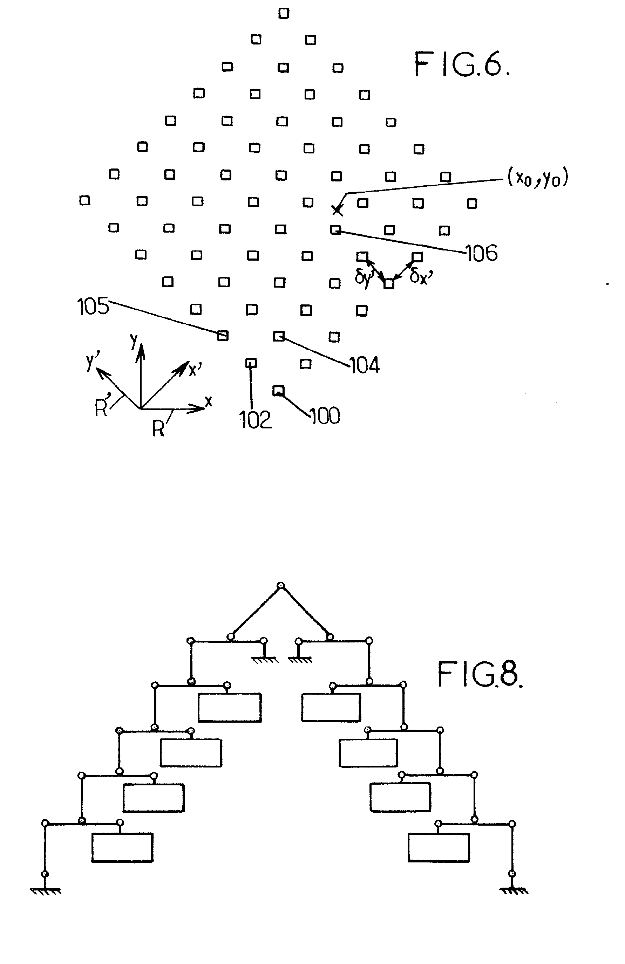

En référence à la figure 6, l'espace de travail généré par le micro-robot 2 illustré sur la figure 1 a été représenté.

Sur cette figure 6, chaque carré représente une position pouvant être atteinte par le micro-robot 2. En particulier, le carré 100 représente la position de l'extrémité de l'organe d'actionnement 33 lorsqu'aucun module d'entraînement 6 à 16 n'est activé, c'est-à-dire lorsque les doigts d'entraînement 56 de tous les modules d'entraînement sont dans une position basse. Le carré 102 représente la position de l'extrémité de l'organe d'actionnement 33 lorsque le module d'entraînement 14 a été actionné, c'est-à dire lorsque le doigt d'entraînement 56 du module d'entraînement 14 est positionné en position haute. De la même façon, le carré 104 représente la position de l'extrémité de l'organe d'actionnement 33 lorsque les modules d'entraînement 14 et 16 de la première paire ont été actionnés, c'est-à dire lorsque les doigts d'entraînement 56 des modules d'entraînement 14 et 16 sont positionnés en position haute. Le carré 105 représente la position de l'extrémité de l'organe d'actionnement 33 lorsque le module d'entraînement 10 de la deuxième paire a été actionné.

Le micro-robot 2 selon ce premier mode de réalisation de l'invention présente une résolution de 500 nanomètres. Chaque module d'entraînement génère un déplacement de 10 micromètres entre leurs deux positions. Ce micro-robot 2 occupe un espace de travail d'environ 4 cm par 4 cm pour une épaisseur de 500 micromètres. Il génère un espace de travail discret carré de 4 micromètres de côté contenant 64 positions distinctes, stables et robustes.

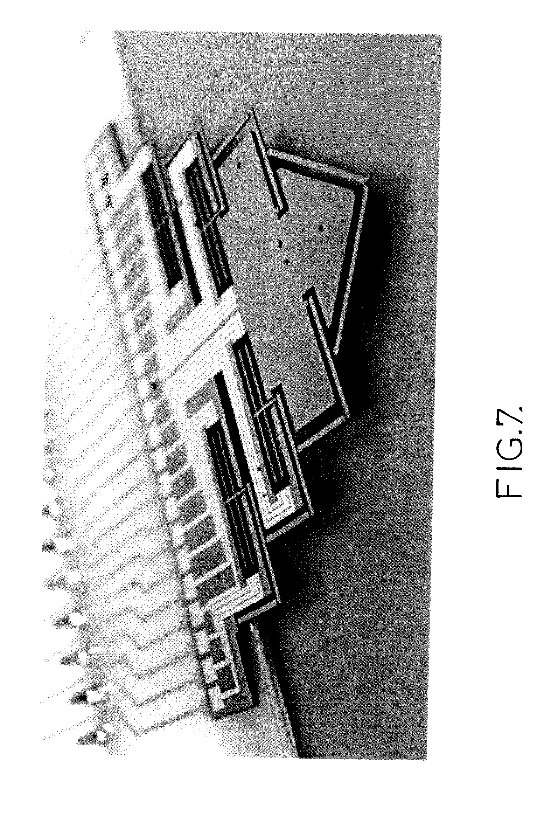

Selon un deuxième mode de réalisation de l'invention photographié sur la figure 7, le micro-robot 2 comporte deux paires de modules d'entraînement.

En variante, le micro-robot selon l'invention peut comporter uniquement une paire de modules d'entraînement.

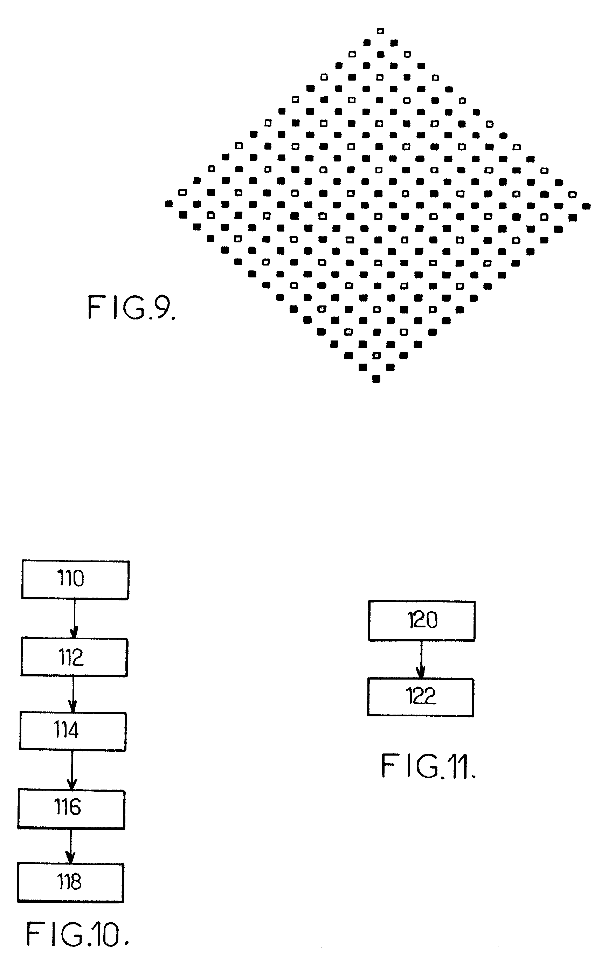

Selon un troisième mode de réalisation de l'invention illustré sur la figure 8, le micro-robot 2 comporte quatre paires de modules d'entraînement. Dans ce cas, le micro-robot 2 est propre à générer un espace de travail illustré sur la figure 9. Cet espace de travail présente les mêmes dimensions que l'espace de travail généré par le micro-robot illustré sur la figure 1 mais avec une résolution double, c'est-à-dire que, dans cet espace de travail, le micro-robot peut atteindre un nombre de positions quadruple du nombre de positions atteintes par le micro-robot ayant trois paires de modules d'entraînement. Ces positions sont espacées les unes des autres d'une distance deux fois plus petite que la distance séparant deux positions atteintes par le micro-robot ayant trois paires de modules d'entraînement.

L'invention concerne également un procédé de commande d'un déplacement de l'organe d'actionnement 33 du micro-robot selon les premier, deuxième et troisième modes de réalisation de l'invention. Ce procédé est mis en oeuvre par un programme d'ordinateur comportant des instructions permettant de réaliser ce procédé de commande, lorsqu'elles sont exécutées par un calculateur de type processeur.

Le procédé de commande décrit est uniquement décrit pour le premier mode de réalisation de l'invention en référence aux figures 1, 2, 6 et 10. Il débute par une étape 110 au cours de laquelle l'opérateur saisie les coordonnées $(x_0, y_0)$ de la position à laquelle il souhaite déplacer l'organe d'actionnement 33.

Ces coordonnées $(x_0, y_0)$ sont saisies dans le repère orthogonal R' (x', y') illustré sur la figure 6. Le repère R (x, y) présente les mêmes orientations que le repère R (x, y, z) illustré sur la figure 1. Les vecteurs directeurs du repère R' (x', y') présentent un angle de 45 ° par rapport aux vecteurs directeurs du repère R (x, y). Les vecteurs directeurs du repère R' (x', y') présentent donc un angle de 45 ° par rapport à la première direction x et à la seconde direction y.

En variante, ces coordonnées sont saisies dans le repère R (x, y), puis elles sont converties en coordonnées dans la repère R' (x', y').

Au cours d'une étape 112, l'abscisse $x_0$ est divisée par l'écart minimal $\delta_{x'}$ entre deux positions atteignables par le micro-robot 2 le long de l'axe x', l'ordonnée $y_0$ est divisée par l'écart minimal $\delta_{y'}$ entre deux positions atteignables par le micro-robot 2 le long de l'axe y'.

Au cours d'une étape 114, l'entier le plus proche de la division $x_0/\delta_{x'}$ est calculé, et l'entier le plus proche de la division $y_0/\delta_{y'}$ est calculé. Les étapes 112 et 114 permettent de déterminer quelle est la position atteignable par le micro-robot 2, la plus proche de la position demandée par l'opérateur. Par exemple, la position 106 définie par les coordonnées (4, 2) est calculée.

Au cours d'une étape 116, les coordonnées (4, 2) de la position 106 calculée au cours de l'étape 114, sont converties de façon binaire. Par exemple, l'abscisse 4 devient 100 et l'ordonnée 2 devient 10.

Au cours d'une étape 118, un courant est appliqué aux bornes électriques 65, 66, 67 reliés aux modules d'entraînement définis par les liaisons électriques 68 pour que l'extrémité de l'organe d'actionnement 33 atteigne la position $(x_0, y_0)$. Par exemple, les modules d'entraînement 8 et 10 doivent être actionnés pour atteindre la position $(x_0, y_0)$.

Les étapes du procédé de commande peuvent être exprimées par l'équation mathématique suivante :

$$\begin{cases} bl_i = \neg((round\left(\dfrac{x'_0}{\delta x'}\right) \,\&\, 2^{N1-i}) == 0) \\ br_j = \neg((round\left(\dfrac{y'_0}{\delta y'}\right) \,\&\, 2^{N2-j}) == 0) \end{cases}$$

Dans laquelle :

- $bl_i$ est un nombre booléen représentant l'état du module d'entraînement i ;
- $br_j$ est un nombre booléen représentant l'état du module d'entraînement j ;
- i varie de 1 à N1, N1 est le nombre de modules d'entraînement de gauche ;
- j varie de 1 à N2, N2 est le nombre de modules d'entraînement de droite ;
- « *round* » est la fonction arrondie ;
- « ¬ » est la fonction logique NON ;
- & est la fonction logique ET bit à bit (en anglais « bitwise and ») ;
- $x'_0$ et $y'_0$ sont les coordonnées que l'opérateur souhaite atteindre ;
- $\delta_{x'}$ et $\delta_{y'}$ sont les résolutions du micro-robot dans les directions x' et y' ;
- = = est l'opérateur de test d'égalité.

Notez que contrairement à la description de la structure du micro-robot, la numérotation des modules d'entraînement varie, pour i et j, de haut en bas en référence aux figures, dans les formules mathématiques ci-dessus et ci-dessous.

L'invention concerne également un procédé de simulation du déplacement d'un objet par le micro-robot 2 selon le premier, le deuxième et le troisième modes de réalisation de l'invention.

Ce procédé de simulation débute par une étape de saisie 120 en numérotation binaire des positions haute ou basse des doigts d'actionnement de chaque module d'entraînement du micro-robot.

Puis, au cours d'une étape 122, l'abscisse $x_0$ et l'ordonnée $y_0$ de l'organe d'actionnement 33 sont calculées dans le repère R (x, y) à partir de la longueur $L_1$ de la première bielle 46, de la largeur $L_2$ de la première bielle 46 et des déplacements générés par les modules d'entraînement.

En particulier, l'ordonnée et l'abscisse de l'organe d'actionnement sont calculées à partir de la formule suivante :

$$\begin{bmatrix} x \\ y \end{bmatrix} = \frac{1}{4}\left(\frac{1}{2}+\frac{L_2}{L_1}\right).\begin{bmatrix} \delta l_1 & \cdots & \dfrac{\delta l_{N1}}{2^{N1-1}} & -\delta r_1 & \cdots & -\dfrac{\delta r_{N2}}{2^{N2-1}} \\ \delta l_1 & \cdots & \dfrac{\delta l_{N1}}{2^{N1-1}} & \delta r_1 & \cdots & \dfrac{\delta r_{N2}}{2^{N2-1}} \end{bmatrix}.\begin{bmatrix} bl_1 \\ \vdots \\ bl_{N1} \\ br_1 \\ \vdots \\ br_{N2} \end{bmatrix}$$

Dans laquelle:

- $x_0$, $y_0$ sont l'abscisse et l'ordonnée de l'organe d'actionnement 33 ;
- $bl_i$ est un nombre booléen représentant l'état du module d'entraînement i ;
- $br_j$ est un nombre booléen représentant l'état du module d'entraînement j ;
- i varie de 1 à N1, N1 est le nombre de modules d'entraînement de gauche ;
- j varie de 1 à N2, N2 est le nombre de modules d'entraînement de droite ;
- $L_2$ est la largeur de la première bielle 46 ;
- $L_1$ est la longueur de la première bielle 46 ;
- $\delta_{l1}$ à $\delta_{lN1}$ sont les déplacements générés par les modules d'entraînement de gauche ;
- $\delta_{r1}$ à $\delta_{rN2}$ sont les déplacements générés par les modules d'entraînement de droite..

En variante, lorsque le micro-robot 2 comporte uniquement une paire de modules d'entraînement 6, 8, les embiellages primaires 22, 24 articulés aux modules d'entraînement 6, 8 sont articulés à un prolongement portant ces modules d'entraînement 6, 8.

En variante, le micro-robot 2 comporte un nombre différent de modules d'entraînement disposés du côté droit et de modules d'entraînement disposés du côté gauche du support 4. Dans ce cas, l'espace de travail n'est pas symétrique et les positions atteignables par le micro-robot ne sont pas équidistantes.

En variante, les doigts d'entraînement des modules d'entraînement disposés à droite du support 4 sont propres à se déplacer sur une distance différente de la distance propre à être parcourue par les doigts d'entraînement des modules d'entraînement de gauche. Dans ce cas, les positions atteintes par l'organe d'actionnement ne sont pas équidistantes les unes des autres.

En variante, chaque prolongement 40 à 45 est propre à porter l'ensemble d'un module d'entraînement.

En variante, le micro-robot est réalisé dans un matériau piézoélectrique, électrostatique ou à mémoire de forme.

En variante, les bras d'actionnement 48 et 49 sont articulés en tout point des premières bielles 46 des embiellages secondaires, c'est-à-dire qu'ils ne sont pas forcément articulés au milieu des bielles 46.

Avantageusement, aucune énergie extérieure n'est nécessaire pour maintenir ces modules bistables dans leurs positions stables. Ces modules bistables présentent une grande répétabilité.

Avantageusement, ce micro-robot 2 est utilisé en boucle ouverte.

Avantageusement, ce micro-robot présente une grande résolution.

Avantageusement, les positions d'arrêt de l'extrémité de l'organe d'actionnement 33 sont équidistants les uns par rapport aux autres.

Avantageusement, l'espace de travail présente quatre angles droits.

Avantageusement, l'espace de travail est un espace de travail à deux dimensions discret.

## Revendications

1. Micro-robot (2) micro-fabriqué selon la technologie des microsystèmes électromécaniques, comprenant i paire de modules d'entraînement (6, 8, 10, 12, 14, 16) ; i variant de 1 à n avec n supérieur ou égal à 1 ; chaque module d'entraînement (6, 8, 10, 12, 14, 16) comportant un doigt d'entraînement (56) propre à être déplacé selon une direction, dite seconde direction (y) ; le micro-robot comportant en outre :

- un support (4) agencé pour porter deux modules d'entraînement (6, 8, 10, 12, 14, 16) alignés selon une direction perpendiculaire à la seconde direction (y), dite première direction (x) ; lesdits modules d'entraînement (6, 8, 10, 12, 14, 16) formant une paire de modules d'entraînement ;
- i paire d'embiellages primaires (22, 24, 26, 28, 30, 32), chaque embiellage primaire (22, 24, 26, 28, 30, 32) étant articulé au doigt d'entraînement (56) d'un module d'entraînement (6, 8, 10, 12, 14, 16) de la i$^{ième}$ paire de modules d'entrainement (6, 8, 10, 12, 14, 16) ;
- une paire d'embiellage secondaire (18, 20), chaque embiellage secondaire (18, 20) étant articulé à l'embiellage primaire (22, 24, 26, 28, 30, 32) de la n$^{ième}$ paire de modules d'entrainement (6, 8, 10, 12, 14, 16) et au support (4) ; et
- un organe d'actionnement (33) articulé à chaque embiellage secondaire (18, 20).

2. Micro-robot (2) selon la revendication 1, dans lequel les embiellages primaires (22, 24, 26, 28, 30, 32) et les embiellages secondaires (18, 20) comportent chacun une bielle s'étendant selon la première direction (x), dite première bielle (46), et une bielle s'étendant selon la seconde direction (y), dite seconde bielle (47), ladite seconde bielle (47) étant articulée à la première bielle (46).

3. Micro-robot (2) selon la revendication 2, dans lequel les secondes bielles (47) d'un embiellage secondaire (18, 20) sont articulées sensiblement au milieu des premières bielles (46) d'un embiellage primaire (22, 24, 26, 28, 30, 32), et lorsque n est supérieur ou égal à 2, les secondes bielles (47) d'un embiellage primaire (22, 24, 26, 28, 30, 32) articulé à un module d'entraînement (6, 8, 10, 12, 14, 16) d'une i$^{ième}$ paire sont articulées sensiblement au milieu des premières bielles (46) d'un embiellage primaire (22, 24, 26, 28, 30, 32) articulé à un module d'entraînement (6, 8, 10, 12, 14, 16) d'une i-1$^{ième}$ paire.

4. Micro-robot (2) selon l'une quelconque des revendications 2 et 3, dans lequel les premières bielles (46) présentent chacune une dimension supérieure à 100 fois la distance apte à être parcourue par un doigt d'entraînement (56) d'un unique module d'entraînement (6, 8, 10, 12, 14, 16).

5. Micro-robot (2) selon l'une quelconque des revendications 2 à 4, dans lequel l'organe d'actionnement (33) comporte deux bras d'actionnement (48, 49) articulés l'un à l'autre ; lesdits bras d'actionnement (48, 49) s'étendent sensiblement selon un angle de 45° par rapport aux premières bielles (46) des embiellages secondaires (18, 20).

6. Micro-robot (2) selon l'une quelconque des revendications 1 à 5, dans lequel le support (4) comporte n zones intercalaires (34, 36, 38) intercalées dans la première direction (x) entre les modules d'entraînement (6, 8, 10, 12, 14, 16) d'une même paire ; et lorsque n est supérieur ou égal à 2, pour i variant de 1 à n, la i-1$^{ième}$ zone intercalaire (34, 36, 38) intercalée entre les modules d'entraînement (6, 8, 10, 12, 14, 16) de la i-1$^{ième}$ paire présente une dimension supérieure selon la première direction (x) à la zone intercalaire (34, 36, 38) intercalée entre les modules d'entraînement (6, 8, 10, 12, 14, 16) de la i$^{ième}$ paire.

7. Micro-robot (2) selon l'une quelconque des revendications 1 à 6, dans lequel le support (4) comporte n paire de prolongements (40, 41, 42, 43, 44, 45) propre à porter chacun au moins une partie d'un module d'entraînement (6, 8, 10, 12, 14, 16) ; lesdits prolongements (40, 41, 42, 43, 44, 45) s'étendent dans la première direction (x) dans un sens opposé l'un à l'autre.

8. Micro-robot (2) selon l'une quelconque des revendications 1 à 7, dans lequel lorsque n est supérieur à 2 ; les modules d'entraînement (6, 8, 10, 12, 14, 16) de la i$^{ième}$ paire sont chacun intercalés entre les modules d'entraînement (6, 8, 10, 12, 14, 16) de la i-1$^{ième}$ paire et les modules d'entraînement (6, 8, 10, 12, 14, 16) de la i+1$^{ième}$ paire ; et dans lequel les modules d'entraînement (6, 8, 10, 12, 14, 16) de la i$^{ième}$ paire sont alignés selon la seconde direction (y) et décalés, chacun en sens opposé selon la première direction (x), par rapport aux modules d'entraînement (6, 8, 10, 12, 14, 16) de la i +1$^{ième}$ paire.

9. Micro-robot (2) selon l'une quelconque des revendications 7 et 8, dans lequel :

- pour i égal à 1, les embiellages primaires (22, 24, 26, 28, 30, 32) articulés à la i$^{ième}$ paire de modules d'entraînement (6, 8, 10, 12, 14, 16) sont articulés au prolongement (40, 41, 42, 43, 44, 45) portant cette i$^{ième}$ paire de modules d'entraînement (6, 8, 10, 12, 14, 16) ; et
- pour i variant de 2 à n, les embiellages primaires (22, 24, 26, 28, 30, 32) articulés à la i$^{ième}$ paire de modules d'entraînement (6, 8, 10, 12, 14, 16), sont également articulés chacun à l'embiellage primaire (22, 24, 26, 28, 30, 32) articulé à la i-1$^{ième}$ paire de modules d'entraînement (6, 8, 10, 12, 14, 16).

**10.** Micro-robot (2) selon l'une quelconque des revendications 1 à 9 dans lequel chaque module d'entraînement (6, 8, 10, 12, 14, 16) comporte au moins un actionneur (54, 55) propre à déplacer le doigt d'entraînement (56), lorsque ledit actionneur (54, 55) est alimenté en courant, et dans lequel ledit support (4) porte des liaisons électriques (68) dans lesquelles un courant électrique est propre à passer pour alimenter lesdits actionneurs (54, 55).

**11.** Procédé de commande d'un déplacement de l'organe d'actionnement (33) d'un micro-robot (2) vers une position (106) définie par des coordonnées dans un repère prédéfini (R') ; ledit procédé de commande étant mis en oeuvre par un calculateur propre à commander le micro-robot (2) ; le micro robot (2) étant micro-fabriqué selon la technologie des microsystèmes électromécaniques, le micro robot (2) comprenant i paire de modules d'entraînement (6, 8, 10, 12, 14, 16) ; i variant de 1 à n avec n supérieur ou égal à 1 ; chaque module d'entraînement (6, 8, 10, 12, 14, 16) comportant un doigt d'entraînement (56) propre à être déplacé selon une direction, dite seconde direction (y) ; le micro-robot (2) comportant :

- un support (4) agencé pour porter deux modules d'entraînement (6, 8, 10, 12, 14, 16) alignés selon une direction perpendiculaire à la seconde direction (y), dite première direction (x) ; lesdits modules d'entraînement (6, 8, 10, 12, 14, 16) formant une paire de modules d'entraînement ;
- i paire d'embiellages primaires (22, 24, 26, 28, 30, 32), chaque embiellage primaire (22, 24, 26, 28, 30, 32) étant articulé au doigt d'entraînement (56) d'un module d'entraînement (6, 8, 10, 12, 14, 16) de la $i^{ieme}$ paire de modules d'entraînement (6, 8, 10, 12, 14, 16) ;
- une paire d'embiellage secondaire (18, 20), chaque embiellage secondaire (18, 20) étant articulé à l'embiellage primaire (22, 24, 26, 28, 30, 32) de la $n^{ième}$ paire de modules d'entrainement (6, 8, 10, 12, 14, 16) et au support (4) ; et
- un organe d'actionnement (33) articulé à chaque embiellage secondaire (18, 20) ; ledit procédé comportant les étapes suivantes :
- pour chaque coordonnée parmi ladite abscisse et ladite ordonnée,

  - division (110) de ladite coordonnée par l'écart minimal ($\delta_{x'}$, $\delta_{y'}$) entre deux positions aptes à être atteintes par l'organe d'actionnement (33) ;
  - calcul (112) de l'entier le plus proche du résultat de ladite division ;
  - conversion (114) binaire dudit entier le plus proche ;
  - pour chaque bit égal à un de chaque nombre binaire obtenu, déplacement (116) vers une position haute du doigt d'actionnement (56) d'un module d'entraînement (6, 8, 10, 12, 14, 16) défini par des liaisons électriques formées sur ledit support (4).

**12.** Procédé de simulation du déplacement d'un objet par un micro-robot (2) ; ledit procédé de simulation étant mis en oeuvre par un calculateur propre à commander ledit micro-robot (2) ; le micro robot (2) étant micro-fabriqué selon la technologie des microsystèmes électromécaniques, le micro robot (2) comprenant i paire de modules d'entraînement (6, 8, 10, 12, 14, 16) ; i variant de 1 à n avec n supérieur ou égal à 1 ; chaque module d'entraînement (6, 8, 10, 12, 14, 16) comportant un doigt d'entraînement (56) propre à être déplacé selon une direction, dite seconde direction (y) ; le micro-robot (2) comportant :

- un support (4) agencé pour porter deux modules d'entraînement (6, 8, 10, 12, 14, 16) alignés selon une direction perpendiculaire à la seconde direction (y), dite première direction (x) ; lesdits modules d'entraînement (6, 8, 10, 12, 14, 16) formant une paire de modules d'entraînement ;
- i paire d'embiellages primaires (22, 24, 26, 28, 30, 32), chaque embiellage primaire (22, 24, 26, 28, 30, 32) étant articulé au doigt d'entraînement (56) d'un module d'entraînement (6, 8, 10, 12, 14, 16) de la $i^{ième}$ paire de modules d'entrainement (6, 8, 10, 12, 14, 16) ;

  - une paire d'embiellage secondaire (18, 20), chaque embiellage secondaire (18, 20) étant articulé à l'embiellage primaire (22, 24, 26, 28, 30, 32) de la $n^{ième}$ paire de modules d'entrainement (6, 8, 10, 12, 14, 16) et au support (4) ; et

  - un organe d'actionnement (33) articulé à chaque embiellage secondaire (18, 20), ledit procédé comportant les étapes suivantes :

  - saisie (120) en nombre binaire des positions des doigts d'actionnement (56) de chaque module d'entraînement (6, 8, 10, 12, 14, 16) du micro-robot (2) ;
  - calcul (122) de l'ordonnée et de l'abscisse de l'organe d'actionnement (33) dans un repère prédéfini (R')

à partir de la longueur de la première bielle (46), de la largeur de la première bielle (46) et des déplacements ($\delta_l$, $\delta_r$) des modules d'entraînement.

13. Programme informatique, **caractérisé en ce qu'**il comporte des instructions pour mettre en oeuvre le procédé selon la revendication 11, lorsqu'elles sont exécutées par ledit calculateur.

14. Programme informatique, **caractérisé en ce qu'**il comporte des instructions pour mettre en oeuvre le procédé selon la revendication 12, lorsqu'elles sont exécutées par ledit calculateur.

**Patentansprüche**

1. Mikroroboter (2), der nach der Technologie von elektromechanischen Mikrosystemen mikrogefertigt ist, umfassend i Paar von Antriebsmodulen (6, 8, 10, 12, 14, 16), wobei i von 1 bis n variiert, mit n größer oder gleich 1, wobei jedes Antriebsmodul (6, 8, 10, 12, 14, 16) einen Antriebsfinger (56) umfasst, der dazu geeignet ist, längs einer als zweite Richtung (y) bezeichneten Richtung verlagert zu werden, wobei der Mikroroboter weiter umfasst:

    - einen Träger (4), der dazu angeordnet ist, zwei Antriebsmodule (6, 8, 10, 12, 14, 16) zu tragen, die längs einer als erste Richtung (x) bezeichneten Richtung orthogonal zu der zweiten Richtung (y) ausgerichtet sind, wobei die Antriebsmodule (6, 8, 10, 12, 14, 16) ein Paar von Antriebsmodulen bilden,
    - i Paar von primären Stangensätzen (22, 24, 26, 28, 30, 32), wobei jeder primäre Stangensatz (22, 24, 26, 28, 30, 32) an dem Antriebsfinger (56) eines Antriebsmoduls (6, 8, 10, 12, 14, 16) von dem i-ten Paar von Antriebsmodulen (6, 8, 10, 12, 14, 16) angelenkt ist,
    - ein Paar von sekundären Stangensätzen (18, 20), wobei jeder sekundäre Stangensatz (18, 20) an dem primären Stangensatz (22, 24, 26, 28, 30, 32) von dem n-ten Paar von Antriebsmodulen (6, 8, 10, 12, 14, 16) und an dem Träger (4) angelenkt ist, und
    - ein Betätigungselement (33), welches an jedem sekundären Stangensatz (18, 20) angelenkt ist.

2. Mikroroboter (2) nach Anspruch 1, wobei die primären Stangensätze (22, 24, 26, 28, 30, 32) und die sekundären Stangensätze (18, 20) jeweils eine als erste Stange (46) bezeichnete Stange umfassen, die sich längs der ersten Richtung (x) erstreckt, und eine als zweite Stange (47) bezeichnete Stange umfassen, die sich längs der zweiten Richtung (y) erstreckt, wobei die zweite Stange (47) an der ersten Stange (46) angelenkt ist.

3. Mikroroboter (2) nach Anspruch 2, wobei die zweiten Stangen (47) von einem sekundären Stangensatz (18, 20) im Wesentlichen in der Mitte der ersten Stangen (46) von einem primären Stangensatz (22, 24, 26, 28, 30, 32) angelenkt sind, und, wenn n größer oder gleich 2 ist, die zweiten Stangen (47) von einem an einem Antriebsmodul (6, 8, 10, 12, 14, 16) von einem i-ten Paar angelenkten primären Stangensatz (22, 24, 26, 28, 30, 32) im Wesentlichen in der Mitte der ersten Stangen (46) von einem an einem Antriebsmodul (6, 8, 10, 12, 14, 16) von einem (i-1)-ten Paar angelenkten primären Stangensatz (22, 24, 26, 28, 30, 32) angelenkt sind.

4. Mikroroboter (2) nach einem der Ansprüche 2 und 3, wobei die ersten Stangen (46) jeweils eine Abmessung aufweisen, die größer ist als das Hundertfache der Distanz, die dazu geeignet ist, von einem Antriebsfinger (56) eines einzigen Antriebsmoduls (6, 8, 10, 12, 14, 16) durchlaufen zu werden.

5. Mikroroboter (2) nach einem der Ansprüche 2 bis 4, wobei das Betätigungselement (33) zwei aneinander angelenkte Betätigungsarme (48, 49) umfasst, wobei die Betätigungsarme (48, 49) sich im Wesentlichen gemäß einem Winkel von 45° in Bezug auf die ersten Stangen (46) der sekundären Stangensätze (18, 20) erstrecken.

6. Mikroroboter (2) nach einem der Ansprüche 1 bis 5, wobei der Träger (4) n Zwischenregionen (34, 36, 38) umfasst, die in der ersten Richtung (x) zwischen den Antriebsmodulen (6, 8, 10, 12, 14, 16) von einem gleichen Paar angeordnet sind, und, wenn n größer oder gleich 2 ist, für i von 1 bis n, die zwischen den Antriebsmodulen (6, 8, 10, 12, 14, 16) des (i-1)-ten Paars angeordnete (i-1)-te Zwischenregion (34, 36, 38) längs der ersten Richtung (x) eine größere Abmessung aufweist als die Zwischenregion (34, 36, 38), die zwischen den Antriebsmodulen (6, 8, 10, 12, 14, 16) von dem i-ten Paar angeordnet ist.

7. Mikroroboter nach einem der Ansprüche 1 bis 6, wobei der Träger (4) n Paare von Verlängerungen (40, 41, 42, 43, 44, 45) aufweist, dazu geeignet, jeweils wenigstens einen Teil von einem Antriebsmodul (6, 8, 10, 12, 14, 16) zu tragen, wobei die Verlängerungen (40, 41, 42, 43, 44, 45) sich in der ersten Richtung (x) in eine zueinander entgegengesetzte Richtung erstrecken.

**8.** Mikroroboter (2) nach einem der Ansprüche 1 bis 7, wobei, wenn n größer als 2 ist, die Antriebsmodule (6, 8, 10, 12, 14, 16) von dem i-ten Paar jeweils zwischen den Antriebsmodulen (6, 8, 10, 12, 14, 16) von dem (i-1)-ten Paar und den Antriebsmodulen (6, 8, 10, 12, 14, 16) von dem (i+1)-ten Paar angeordnet sind, und wobei die Antriebsmodule (6, 8, 10, 12, 14, 16) von dem i-ten Par längs der zweiten Richtung (y) ausgerichtet und jeweils in entgegengesetzter Richtung längs der ersten Richtung (x) versetzt sind, in Bezug auf die Antriebsmodule (6, 8, 10, 12, 14, 16) von dem (i+1)-ten Paar.

**9.** Mikroroboter (2) nach einem der Ansprüche 7 und 8, wobei:

- für i gleich 1, die an dem i-ten Paar von Antriebsmodulen (6, 8, 10, 12, 14, 16) angelenkten primären Stangensätze (22, 24, 26, 28, 30, 32) an der Verlängerung (40, 41, 42, 43, 44, 45) angelenkt sind, welche dieses i-te Paar von Antriebsmodulen (6, 8, 10, 12, 14, 16) trägt, und
- für i von 2 bis n, die an dem i-ten Paar von Antriebsmodulen (6, 8, 10, 12, 14, 16) angelenkten primären Stangensätze (22, 24, 26, 28, 30, 32) ebenfalls jeweils an dem primären Stangensatz (22, 24, 26, 28, 30, 32) angelenkt sind, der an dem (i-1)-ten Paar von Antriebsmodulen (6, 8, 10, 12, 14, 16) angelenkt ist.

**10.** Mikroroboter (2) nach einem der Ansprüche 1 bis 9, wobei jedes Antriebsmodul (6, 8, 10, 12, 14, 16) wenigstens einen Aktuator (54, 55) umfasst, der dazu geeignet ist, den Antriebsfinger (56) zu verlagern, wenn der Aktuator (54, 55) mit Strom versorgt wird, und wobei der Träger (4) elektrische Verbindungen (68) trägt, in welchen ein elektrischer Strom fließen kann, um die Aktuatoren (54, 55) zu versorgen.

**11.** Verfahren zum Steuern/Regeln einer Verlagerung von dem Betätigungselement (33) eines Mikroroboters (2) zu einer Position (106), die durch Koordinaten in einem vordefinierten Koordinatensystem (R') definiert ist, wobei das Verfahren zum Steuern/Regeln durch einen Rechner durchgeführt wird, der dazu geeignet ist, den Mikroroboter (2) zu steuern/regeln, wobei der Mikroroboter (2) gemäß der Technologie von elektromechanischen Mikrosystemen mikrogefertigt ist, wobei der Mikroroboter (2) i Paar von Antriebsmodulen (6, 8, 10, 12, 14, 16) umfasst, wobei i von 1 bis n variiert, mit n größer oder gleich 1, wobei jedes Antriebsmodul (6, 8, 10, 12, 14, 16) einen Antriebsfinger (56) umfasst, der dazu geeignet ist, längs einer als zweite Richtung (y) bezeichneten Richtung verlagert zu werden, wobei der Mikroroboter (2) umfasst:

- einen Träger (4), der dazu eingerichtet ist, zwei Antriebsmodule (6, 8, 10, 12, 14, 16) zu tragen, die längs einer als erste Richtung (x) bezeichneten Richtung senkrecht zu der zweiten Richtung (y) ausgerichtet sind, wobei die Antriebsmodule (6, 8, 10, 12, 14, 16) ein Paar von Antriebsmodulen bilden,
- i Paar von primären Stangensätzen (22, 24, 26, 28, 30, 32), wobei jeder primäre Stangensatz (22, 24, 26, 28, 30, 32) an dem Antriebsfinger (56) von einem Antriebsmodul (6, 8, 10, 12, 14, 16) von dem i-ten Paar von Antriebsmodulen (6, 8, 10, 12, 14, 16) angelenkt ist,
- ein Paar sekundärer Stangensätze (18, 20), wobei jeder sekundäre Stangensatz (18, 20) an dem primären Stangensatz (22, 24, 26, 28, 30, 32) von dem n-ten Paar von Antriebsmodulen (6, 8, 10, 12, 14, 16) und an dem Träger (4) angelenkt ist, und
- ein Betätigungselement (33), welches an jedem sekundären Stangensatz (18, 20) angelenkt ist, wobei das Verfahren die folgenden Schritte umfasst:
- für jede Koordinate unter der Abszisse und der Ordinate,

- Division (110) der Koordinate durch den minimalen Abstand ($\delta_{x'}$, $\delta_{y'}$) zwischen zwei Positionen, die dazu geeignet sind, von dem Betätigungselement (33) erreicht zu werden,
- Berechnung (112) der ganzen Zahl, die am nächsten an dem Ergebnis der Division liegt,
- binäre Umwandlung (114) der nächsten ganzen Zahl,
- für jedes Bit, das gleich einer von jeder erhaltenen binären Zahl ist, Verlagern (116) zu einer hohen Position des Betätigungsfingers (56) von einem Antriebsmodul (6, 8, 10, 12, 14, 16), definiert durch elektrische Verbindungen, die auf dem Träger (4) ausgebildet sind.

**12.** Verfahren zur Simulation der Verlagerung von einem Objekt durch einen Mikroroboter (2), wobei das Verfahren zur Simulation durch einen Rechner durchgeführt wird, der dazu geeignet ist, den Mikroroboter (2) zu steuern/regeln, wobei der Mikroroboter (2) gemäß der Technologie von elektromechanischen Mikrosystemen mikrogefertigt ist, wobei der Mikroroboter (2) i Paar von Antriebsmodulen (6, 8, 10, 12, 14, 16) umfasst, wobei i von 1 bis n variiert, mit n größer oder gleich 1, wobei jedes Antriebsmodul (6, 8, 10, 12, 14, 16) einen Antriebsfinger (56) umfasst, der dazu geeignet ist, längs einer als zweite Richtung (y) bezeichneten Richtung verlagert zu werden, wobei der Mikroroboter (2) umfasst:

- einen Träger (4), der dazu eingerichtet ist, zwei Antriebsmodule (6, 8, 10, 12, 14, 16) zu tragen, die gemäß einer als erste Richtung (x) bezeichneten Richtung senkrecht zu der zweiten Richtung (y) ausgerichtet sind, wobei die Antriebsmodule (6, 8, 10, 12, 14, 16) ein Paar von Antriebsmodulen bilden,
- i Paar von primären Stangensätzen (22, 24, 26, 28, 30, 32), wobei jeder primäre Stangensatz (22, 24, 26, 28, 30, 32) an dem Antriebsfinger (56) von einem Antriebsmodul (6, 8, 10, 12, 14, 16) von dem i-ten Paar von Antriebsmodulen (6, 8, 10, 12, 14, 16) angelenkt ist,
- ein Paar von sekundären Stangensätzen (18, 20), wobei jeder sekundäre Stangensatz (18, 20) an dem primären Stangensatz (22, 24, 26, 28, 30, 32) von dem n-ten Paar von Antriebsmodulen (6, 8, 10, 12, 14, 16) und dem Träger (4) angelenkt ist, und
- ein Betätigungselement (33), das an jedem sekundären Stangensatz (18, 20) angelenkt ist, wobei das Verfahren die folgenden Schritte umfasst:

- Erfassen (120) von Positionen der Antriebsfinger (56) von jedem Antriebsmodul (6, 8, 10, 12, 14, 16) des Mikroroboters (2) als Binärzahl,
- Berechnen (122) der Ordinate und der Abszisse von dem Betätigungselement (33) in einem vordefinierten Koordinatensystem (R'), ausgehend von der Länge der ersten Stange (46), der Breite der ersten Stange (46) und den Verlagerungen ($\delta_l$, $\delta_r$) der Antriebsmodule.

13. Datenverarbeitungsprogramm, **dadurch gekennzeichnet, dass** es Anweisungen umfasst, um das Verfahren nach Anspruch 11 umzusetzen, wenn diese durch den Rechner ausgeführt werden.

14. Datenverarbeitungsprogramm, **dadurch gekennzeichnet, dass** es Anweisungen umfasst, um das Verfahren nach Anspruch 12 umzusetzen, wenn diese durch den Rechner ausgeführt werden.

**Claims**

1. Microrobot (2) microfabricated according to microelectromechanical system technology, comprising i pair of drive modules (6, 8, 10, 12, 14, 16) where i ranges from 1 to n, n being greater than or equal to 1; each drive module (6, 8, 10, 12, 14, 16) comprising a drive pin (56) able to be moved in a direction referred to as the second direction (y); the microrobot (2) further comprising:

- a mounting (4) arranged to support two drive modules (6, 8, 10, 12, 14, 16) aligned in a direction perpendicular to the second direction (y), referred to as the first direction (x), said drive modules (6, 8, 10, 12, 14, 16) forming a pair of drive modules;
- i pair of primary connecting-rod assemblies (22, 24, 26, 28, 30, 32), each primary connecting-rod assembly (22, 24, 26, 28, 30, 32) being pivotably connected to the drive pin (56) of a drive module (6, 8, 10, 12, 14, 16) of the ith pair of drive modules (6, 8, 10, 12, 14, 16);
- a pair of secondary connecting-rod assemblies (18, 20), each secondary connecting-rod assembly (18, 20) being pivotably connected to the primary connecting-rod assembly (22, 24, 26, 28, 30, 32) of the nth pair of drive modules (6, 8, 10, 12, 14, 16) and to the mounting (4); and
- an actuating member (33) pivotably connected to each secondary connecting-rod assembly (18,20).

2. Microrobot (2) according to claim 1, wherein the primary connecting-rod assemblies (22, 24, 26, 28, 30, 32) and the secondary connecting-rod assemblies (18, 20) each comprise a rod extending in the first direction (x), referred to as the first rod (46), and a rod extending in the second direction (y), referred to as the second rod (47), said second rod (47) being pivotably connected to the first rod (46).

3. Microrobot (2) according to claim 2, wherein the second rods (47) of a secondary connecting-rod assembly (18, 20) are pivotably connected substantially to the middle of the first rods (46) of a primary connecting-rod assembly (22, 24, 26, 28, 30, 32), and when n is greater than or equal to 2, the second rods (47) of a primary connecting-rod assembly (22, 24, 26, 28, 30, 32) pivotably connected to a drive module (6, 8, 10, 12, 14, 16) of an ith pair are pivotably connected substantially to the middle of the first rods (46) of a primary connecting-rod assembly (22, 24, 26, 28, 30, 32) pivotably connected to a drive module (6, 8, 10, 12, 14, 16) of an i-1 pair.

4. Microrobot (2) according to either of claims 2 or 3, wherein the first rods (46) each have a dimension greater than 100 times the distance that a drive pin (56) of a single drive module (6, 8, 10, 12, 14, 16) is able to travel.

5. Microrobot (2) according to any of claims 2 to 4, wherein the actuating member (33) comprises two actuating arms (48, 49) pivotably connected to each other, said actuating arms (48, 49) extending substantially at a 45° angle relative to the first rods (46) of the secondary connecting-rod assemblies (18,20).

6. Microrobot (2) according to any of claims 1 to 5, wherein the mounting (4) comprises n dividing areas (34, 36, 38) inserted in the first premiere direction (x) between the drive modules (6, 8, 10, 12, 14, 16) of a same pair, and when n is greater than or equal to 2, for i ranging from 1 to n, a dimension of the i-1 dividing area (34, 36, 38) inserted between the drive modules (6, 8, 10, 12, 14, 16) of the i-1 pair is greater in the first direction (x) than that of the dividing area (34, 36, 38) inserted between the drive modules (6, 8, 10, 12, 14, 16) of the $i^{th}$ pair.

7. Microrobot (2) according to any of claims 1 to 6, wherein the mounting (4) comprises n pair of extensions (40, 41, 42, 43, 44, 45) each able to support at least part of a drive module (6, 8, 10, 12, 14, 16), said extensions (40, 41, 42, 43, 44, 45) extending along the first direction (x) but in opposite directions to one another.

8. Microrobot (2) according to any of claims 1 to 7, wherein, when n is greater than 2; the drive modules (6, 8, 10, 12, 14, 16) of the $i^{th}$ pair are each inserted between the drive modules (6, 8, 10, 12, 14, 16) of the i-1 pair and the drive modules (6, 8, 10, 12, 14, 16) of the i+1 pair; and wherein the drive modules (6, 8, 10, 12, 14, 16) of the $i^{th}$ pair are aligned along the second direction (y) and each is offset in opposite directions along the first direction (x) relative to the drive modules (6, 8, 10, 12, 14, 16) of the i+1 pair.

9. Microrobot (2) according to either of claims 7 or 8, wherein:

   - for i equal to 1, the primary connecting-rod assemblies (22, 24, 26, 28, 30, 32) pivotably connected to the $i^{th}$ pair of drive modules (6, 8, 10, 12, 14, 16) are pivotably connected to the extension (40, 41, 42, 43, 44, 45) supporting this $i^{th}$ pair of drive modules (6, 8, 10, 12, 14, 16); and
   - for i ranging from 2 to n, the primary connecting-rod assemblies (22, 24, 26, 28, 30, 32) pivotably connected to the $i^{th}$ pair of drive modules (6, 8, 10, 12, 14, 16), are also each pivotably connected to the primary connecting-rod assembly (22, 24, 26, 28, 30, 32) pivotably connected to the i-1 pair of drive modules (6, 8, 10, 12, 14, 16).

10. Microrobot (2) according to any of claims 1 to 9, wherein each drive module (6, 8, 10, 12, 14, 16) comprises at least one actuator (54, 55) able to move the drive pin (56) when said actuator (54, 55) is supplied with current, and wherein said mounting (4) carries electrical connections (68) through which an electric current is able to flow in order to supply power to said actuators (54, 55).

11. Method for controlling a movement of the actuating member (33) of a microrobot (2) towards a position (106) defined by coordinates in a predefined coordinate system (R'); said control method being carried out by a processor able to control the microrobot (2); the microrobot being microfabricated according to microelectromechanical system technology, the microrobot (2) comprising i pair of drive modules (6, 8, 10, 12, 14, 16), i ranging from 1 to n where n is greater than or equal to 1; each drive module (6, 8, 10, 12, 14, 16) comprising a drive pin (56) able to be moved in a direction referred to as the second direction (y); said microrobot (2) comprising:

   - a mounting (4) arranged to support two drive modules (6, 8, 10, 12, 14, 16) aligned in a direction perpendicular to the second direction (y), referred to as the first direction (x), said drive modules (6, 8, 10, 12, 14, 16) forming a pair of drive modules;
   - i pair of primary connecting-rod assemblies (22, 24, 26, 28, 30, 32), each primary connecting-rod assembly (22, 24, 26, 28, 30, 32) being pivotably connected to the drive pin (56) of a drive module (6, 8, 10, 12, 14, 16) of the $i^{th}$ pair of drive modules (6, 8, 10, 12, 14, 16);
   - a pair of secondary connecting-rod assemblies (18, 20), each secondary connecting-rod assembly (18, 20) being pivotably connected to the primary connecting-rod assembly (22, 24, 26, 28, 30, 32) of the $n^{th}$ pair of drive modules (6, 8, 10, 12, 14, 16) and to the mounting (4); and
   - an actuating member (33) pivotably connected to each secondary connecting-rod assembly (18,20);

   said method comprising the following steps:

   - for each coordinate among said abscissa and said ordinate,

- dividing (110) said coordinate by the minimum deviation ($\delta_{x'}$, $\delta_{y'}$) between two positions reachable by the actuating member (33);
- calculating (112) the closest integer to the result of said division;
- converting (114) said closest integer into binary;
- for each bit equal to one in each binary number obtained, moving (116) to a high position the actuating pin (56) of a drive module (6, 8, 10, 12, 14, 16) defined by electrical connections formed on said mounting (4).

12. Method for simulating the movement of an object by a microrobot (2), said simulation method being carried out by a processor able to control said microrobot (2); the microrobot (2) being microfabricated according to microelectromechanical system technology, the microrobot (2) comprising i pair of drive modules (6, 8, 10, 12, 14, 16), i ranging from 1 to n where n is greater than or equal to 1; each drive module (6, 8, 10, 12, 14, 16) comprising a drive pin (56) able to be moved in a direction, referred to as the second direction (y); said microrobot (2) comprising:

- a mounting (4) arranged to support two drive modules (6, 8, 10, 12, 14, 16) aligned in a direction perpendicular to the second direction (y), referred to as the first direction (x), said drive modules (6, 8, 10, 12, 14, 16) forming a pair of drive modules;
- i pair of primary connecting-rod assemblies (22, 24, 26, 28, 30, 32), each primary connecting-rod assembly (22, 24, 26, 28, 30, 32) being pivotably connected to the drive pin (56) of a drive module (6, 8, 10, 12, 14, 16) of the i$^{th}$ pair of drive modules (6, 8, 10, 12, 14, 16);
- a pair of secondary connecting-rod assemblies (18, 20), each secondary connecting-rod assembly (18, 20) being pivotably connected to the primary connecting-rod assembly (22, 24, 26, 28, 30, 32) of the n$^{th}$ pair of drive modules (6, 8, 10, 12, 14, 16) and to the mounting (4); and
- an actuating member (33) pivotably connected to each secondary connecting-rod assembly (18,20);

said method comprising the following steps:

- entering (120) as a binary number the positions of the actuating pins (56) of each drive module (6, 8, 10, 12, 14, 16) of the microrobot (2);
- calculating (122) the ordinate and abscissa of the actuating member (33) in a predefined coordinate system (R'), based on the length of the first rod (46), the width of the first rod (46), and the movements ($\delta_l$, $\delta_r$) of the drive modules.

13. Computer program, **characterized by** its comprising instructions for implementing the method according to claim 11 when they are executed by said processor.

14. Computer program, **characterized by** its comprising instructions for implementing the method according to claim 12 when they are executed by said processor.

FIG.1.

FIG.2.

FIG.3.

FIG.4.

FIG.5.

FIG.6.

$(x_0, y_0)$

106

$\delta y'$  $\delta x'$

105

y

y'  x'

R'

R

x

102  100

104

FIG.8.

FIG.7.

FIG.9.

FIG.10.

FIG.11.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MICHAEL A. GREMINGER et al.** A Four Degree of Freedom MEMS Microgripper with Novel Bi-Directional Thermal Actuators. *la conférence 2005 de l'IEEE/RSJ intitulée International Conférence on Intelligent Robots and Systems,* 2005
- **QIAO CHEN.** Microfabricated Bistable Module for Digital Microrobotics. *Journal of Micro Nano Mechatronics,* Janvier 2011
- **QIAO CHEN ; YASSINE HADDAB ; PHILIPPE LUTZ.** Microfabricated bistable module for digital microrobotics. Springer, 14 Septembre 2010
- **QIAO CHEN ; YASSINE HADDAB ; PHILIPPE LUTZ.** Characterization and control of a monolithically fabricated bistable module for microrobotic applications. *IEEE/RSJ International Conference on Intelligent Robots and Systems, IROS'10., Taipei : Taiwan, Province of China,* 2010